# EUROPEAN PATENT SPECIFICATION

(11) **EP 4 282 303 B1**
(45) Date of publication and mention of the grant of the patent: **30.04.2025**
(21) Application number: 23173288.4
(22) Date of filing: 15.05.2023
(51) Int. Cl.: A47B 37/04, A47B 77/02, A47B 77/08

(54) **METHOD**
VERFAHREN
MÉTHODE

(30) Priority: 23.05.2022 IL 29327722
(43) Date of publication of application: 29.11.2023
(73) Proprietor: Beeri, Yehoyada, 2018600 Moreshet (IL)
(72) Inventor: Beeri, Yehoyada, 2018600 Moreshet (IL)
(74) Representative: Kurig, Thomas

(56) References cited:
- EP-A1- 3 228 218
- US-A1- 2008 163 564
- US-A1- 2019 307 246

## Description

### FIELD OF THE INVENTION

The present invention relates generally to method of portable or outdoor kitchens, and particularly to a portable or outdoor cooking kitchen with reduced storage space.

### BACKGROUND OF THE INVENTION

Outdoor cooking and the use of outdoor kitchens are increasingly popular because outdoor kitchens provide a gathering place for families and friends and fits with other outdoor activities, particularly during periods of good weather. Outdoor kitchen and dining areas also provide significant value to homes, both in the quality of life offered and the value and distinctiveness of the home in the real estate market.

Heretofore, outdoor cooking has been largely limited to the use of conventional gas barbecue grills. One of the disadvantages of the prior art systems is they take up a large amount of space for storage.

EP 3 228 218 A1 discloses a furniture element including a supporting frame which defines an approximately horizontally arranged flat surface, an angle plate for placing on the flat surface of the supporting frame, the angle plate having a flat base surface corresponding to the defined surface and having a bevelled edge facing away from the supporting frame on each of its longitudinal edges, at least one functional element, which is arranged in the angle plate, and a sliding plate, which is arranged to slide on the bevelled edges of the angle plate facing away from the supporting frame.

US 2019/307246 A1 discloses a piece of outdoor kitchen furniture provided with a displaceable protective element, wherein the protective element includes at least two panels, wherein one panel is tiltable with respect to the other panel, so that the protective element is openable and closable and displaceable between a protective position and a use position by a combination of a sliding movement and a tilting movement.

US 2008/163564 A1 discloses a modular structure system including a plurality of modular units connected to one another. Each of the plurality of modular units are moveable from a collapsed position to an erected position and include a plurality of sidewalls defined by a plurality of cementitious panels hingedly connected to one another and moveable from a closed position to an open position, and a top defined by a cementitious panel. The collapsed position is defined by the plurality of sidewalls and the top being separated and configured in a flat position.

### SUMMARY OF THE INVENTION

The present invention seeks to provide an improved portable cooking kitchen with reduced storage space, as is described more in detail hereinbelow. The portable kitchen may be used outdoors for camping, or on a terrace or porch, or any other convenient place for cooking.

There is thus provided in accordance with an embodiment of the present invention a method that includes providing a kitchen assembly that includes one or more supports, one or more side counters, which are supported by the one or more supports, a central counter and a front panel positioned sideways relative to the one or more supports, wherein there is a space adjacent the one or more side counters and behind the front panel for receiving therein a cooking appliance, and instructing to use the kitchen assembly in one of two modes, a storage mode and a usage mode, wherein in the usage mode the central counter is placed above the space and is adjacent the one or more side counters and the front panel, and the cooking appliance is not in the space, and wherein in the storage mode the central counter is moved away from the space and the cooking appliance is positioned in the space.

### BRIEF DESCRIPTION OF THE DRAWINGS

The present invention will be understood and appreciated more fully from the following detailed description taken in conjunction with the drawings in which:
Figs. 1A and 1B are simplified illustrations of a portable kitchen, in accordance with an embodiment of the invention, in stored and expanded orientations, respectively;
Figs. 2A and 2B are simplified illustrations of the portable kitchen, respectively with a counter top in a position flush with side counter tops and in a position where the counter top is moved to the side to create a space for receiving a stove or grill in the stored orientation; and
Figs. 3A and 3B are simplified illustrations of the rear portion of the portable kitchen, in stored and expanded orientations, respectively.

### DETAILED DESCRIPTION OF EMBODIMENTS

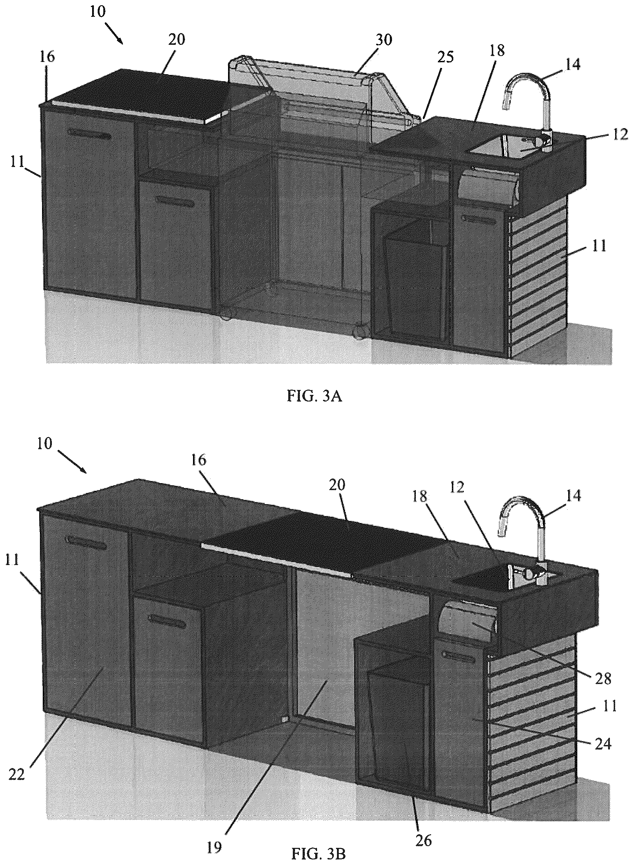

Reference is now made to Figs. 3A and 3B, which illustrate a portable kitchen 10, constructed and operative in accordance with a non-limiting embodiment of the invention.

The portable kitchen 10 may include supports 11 (e.g., side walls or a frame) that support a sink 12, a faucet 14, one or more side counters 16 and 18, a front panel 19, a central counter 20 (which may be slidable, retractable or foldable as described below), a refrigerator or other cooling device 22, tubes or piping for water supply and drainage (not shown), cupboards or shelves 24.

The portable kitchen 10 may include (not shown) one or more lights, such as overhead lights or peripheral lights around the kitchen surfaces, kitchen or barbecue utensils (cutlery, ladles, skewers, bottle or can openers, etc.), a water tank, water pump, batteries, and other accessories.

The portable kitchen 10 may include a garbage bin 26, and a paper towel rack or rod 28.

The portable kitchen 10 may include (not shown) drainage accessories, stove accessories, food smoking accessories, an ice maker, magnets for holding knives and other kitchen accessories, cutting boards, a hood, covers for shade, cup racks, loudspeakers (e.g., with Bluetooth connection), electrical outlets and chargers.

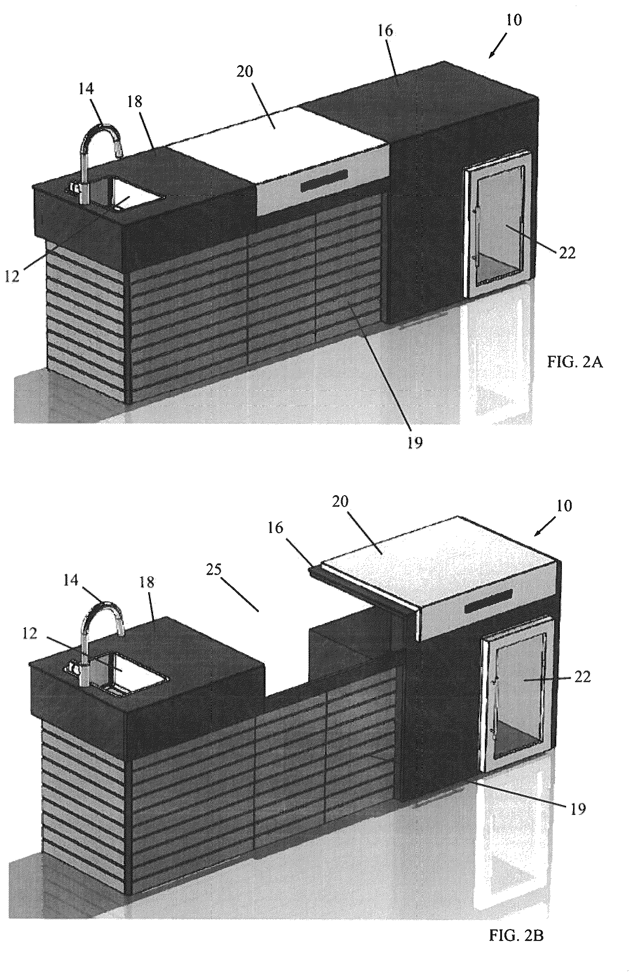

As seen in Figs. 3A and 2B, the central counter 20 may be moved to the side over one of the side counters (such as side counter 16) to create a space 25 to receive therein a cooking appliance 30 (e.g., a stove or grill), as seen in Fig. 3A. The cooking appliance 30 may be any kind of unit for heating or preparing food, such as a stove, barbecue or oven, and may be custom-made for the kitchen if desired.

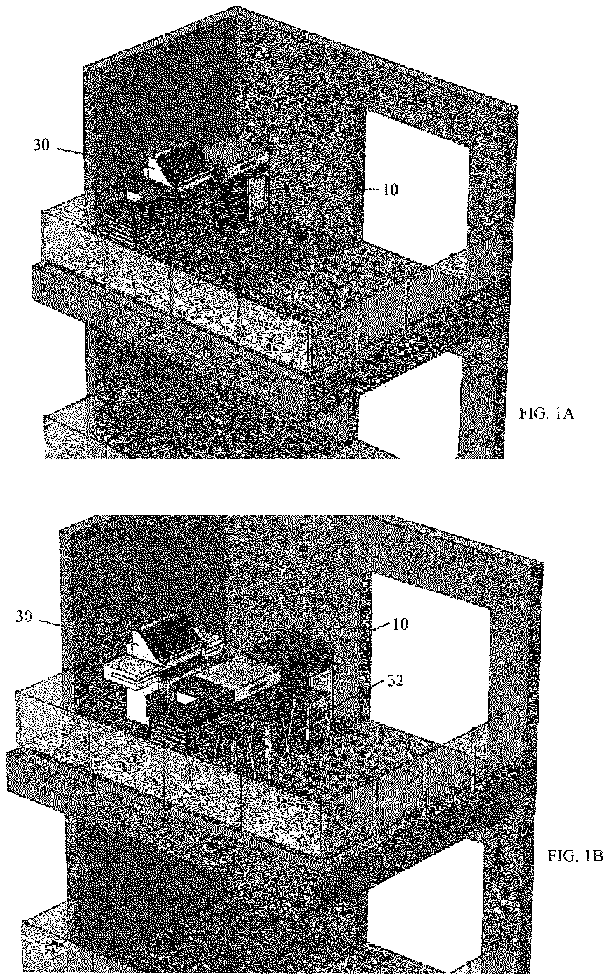

Reference is now made to Figs. 1A and 1B, which illustrate the portable kitchen 10 in stored and expanded orientations, respectively. The portable kitchen 10 may include chairs and other furniture 32.

The portable kitchen 10 may be conveniently stored in the position of Fig. 1A and takes up minimal space on the patio, porch or other place. The portable kitchen 10 may be used both in the stored and expanded orientations.

Accordingly, the method of the invention includes providing kitchen assembly 10 that includes one or more supports 11, one or more side counters 16/18, which are supported by the one or more supports 11, central counter 20 and front panel 19 positioned sideways relative to the one or more supports 11, wherein there is a space 25 adjacent the one or more side counters 16/18 and behind the front panel 19 for receiving therein cooking appliance 30, and instructing to use the kitchen assembly 10 in one of two modes: a storage mode and a usage mode. In the usage mode the central counter 20 is placed above space 25 and is adjacent the one or more side counters 16/18 and the front panel 19, and the cooking appliance 30 is not in the space 25. In the storage mode the central counter 20 is moved away from the space 25 and the cooking appliance 30 is positioned in the space 25.

The portable kitchen 10 may be modular so that its dimensions can be changed to be larger or smaller to suit any particular need. For example, different size counters or cupboards can be supplied in a modular kit; additionally or alternatively, add-on counters or cupboards can be supplied.

The materials from which the different components of the portable kitchen 10 are made are limitless, such as but not limited to, metal (e.g., stainless steel, aluminum), wood, plastic, stone (natural or synthetic) and many others.

## Claims

1. A method comprising:
providing a kitchen assembly (10) that comprises one or more supports (11), one or more side counters (16/18), which are supported by said one or more supports (11), a central counter (20), and a front panel (19) positioned sideways relative to said one or more supports (11), wherein there is a space (25) adjacent said one or more side counters (16/18) and behind said front panel (19) for receiving therein a cooking appliance (30); the method being **characterized in** further comprising:
instructing to use said kitchen assembly (10) in one of two modes, a storage mode and a usage mode, wherein in the usage mode the central counter (20) is placed above said space (25) and is adjacent said one or more side counters (16/18) and said front panel (19), and said cooking appliance (30) is not in said space (25), and wherein in the storage mode the central counter (20) is moved away from said space (25) and said cooking appliance (30) is positioned in said space (25).

2. The method according to claim 1, wherein in the storage mode the central counter (20) is placed over said one or more side counters (16/18).

3. The method according to claim 1, further comprising instructing to add to said kitchen assembly (10) a sink and a faucet.

4. The method according to claim 1, further comprising instructing to add to said kitchen assembly (10) a refrigerator or a cooling device.

5. The method according to claim 1, further comprising instructing to add to said kitchen assembly (10) cupboards or shelves.

6. The method according to claim 1, further comprising instructing to add to said kitchen assembly (10) a garbage bin.

7. The method according to claim 1, further comprising instructing to add to said kitchen assembly (10) a paper towel rack or rod.

8. The method according to claim 1, further comprising instructing to add to said kitchen assembly (10) chairs or furniture.

## Patentansprüche

1. Verfahren, umfassend:
Bereitstellen einer Küchenbaugruppe (10), die eine oder mehrere Stützen (11), eine oder mehrere Seitentheken (16/18), die von der einen oder den mehreren Stützen (11) getragen werden, eine zentrale Theke (20) und eine Frontplatte (19), die seitlich relativ zu der einen oder den mehreren Stützen (11) positioniert ist, umfasst, wobei ein Raum (25) neben der einen oder den mehreren Seitentheken (16/18) und hinter der Frontplatte (19) vorhanden ist, um darin ein Kochgerät (30) aufzunehmen; wobei das Verfahren **dadurch gekennzeichnet ist, dass** es ferner umfasst:
Anweisen der Verwendung der Küchenbaugruppe (10) in einem von zwei Modi, einem Aufbewahrungsmodus und einem Verwendungsmodus, wobei im Verwendungsmodus die zentrale Theke (20) über dem Raum (25) angeordnet ist und an die eine oder mehreren Seitentheken (16/18) und die Frontplatte (19) angrenzt und das Kochgerät (30) sich nicht in dem Raum (25) befindet, und wobei im Aufbewahrungsmodus die zentrale Theke (20) von dem Raum (25) wegbewegt wird und das Kochgerät (30) in dem Raum (25) positioniert wird.

2. Verfahren gemäß Anspruch 1, wobei im Aufbewahrungsmodus die zentrale Theke (20) über der einen oder den mehreren Seitentheken (16/18) angeordnet ist.

3. Verfahren gemäß Anspruch 1, ferner umfassend die Anweisung, der Küchenbaugruppe (10) ein Waschbecken und einen Wasserhahn hinzuzufügen.

4. Verfahren gemäß Anspruch 1, ferner umfassend die Anweisung, der Küchenbaugruppe (10) einen Kühlschrank oder eine Kühlvorrichtung hinzuzufügen.

5. Verfahren gemäß Anspruch 1, ferner umfassend die Anweisung, der Küchenbaugruppe (10) Schränke oder Regale hinzuzufügen.

6. Verfahren gemäß Anspruch 1, ferner umfassend die Anweisung, der Küchenbaugruppe (10) einen Abfalleimer hinzuzufügen.

7. Verfahren gemäß Anspruch 1, ferner umfassend die Anweisung, der Küchenbaugruppe (10) einen Papierhandtuchhalter oder -stab hinzuzufügen.

8. Verfahren gemäß Anspruch 1, ferner umfassend die Anweisung, der Küchenbaugruppe (10) Stühle oder Möbel hinzuzufügen.

## Revendications

1. Un procédé comprenant :
le fait de fournir un ensemble de cuisine (10) qui comprend un ou plusieurs supports (11), un ou plusieurs comptoirs latéraux (16/18), qui sont supportés par ledit ou lesdits supports (11), un comptoir central (20) et un panneau avant (19) positionné latéralement par rapport auxdits un ou plusieurs supports (11), un espace (25) existant, adjacent auxdits un ou plusieurs comptoirs latéraux (16/18) et situé derrière ledit panneau avant (19), pour recevoir en lui un appareil de cuisson (30) ; le procédé étant **caractérisé en ce qu'**il comprend en outre :
le fait de donner pour instructions d'utiliser ledit ensemble de cuisine (10) dans un mode parmi deux modes, à savoir un mode de stockage et un mode d'utilisation ; dans le mode d'utilisation, le comptoir central (20) est placé au-dessus dudit espace (25) et est adjacent auxdits un ou plusieurs comptoirs latéraux (16/18) et audit panneau avant (19), et ledit appareil de cuisson (30) n'est pas dans ledit espace (25), et, dans le mode de stockage, le comptoir central (20) est déplacé en éloignement dudit espace (25) et ledit appareil de cuisson (30) est positionné dans ledit espace (25).

2. Le procédé selon la revendication 1, dans lequel, dans le mode de stockage, le comptoir central (20) est placé au-dessus desdits un ou plusieurs comptoirs latéraux (16/18).

3. Le procédé selon la revendication 1, comprenant en outre le fait de donner pour instruction d'ajouter audit ensemble de cuisine (10) un évier et un robinet.

4. Le procédé selon la revendication 1, comprenant en outre le fait de donner pour instruction d'ajouter audit ensemble de cuisine (10) un réfrigérateur ou un dispositif de refroidissement.

5. Le procédé selon la revendication 1, comprenant en outre le fait de donner pour instruction d'ajouter audit ensemble de cuisine (10) des placards ou des étagères.

6. Le procédé selon la revendication 1, comprenant en outre le fait de donner pour instruction d'ajouter une poubelle audit ensemble de cuisine (10).

7. Le procédé selon la revendication 1, comprenant en outre le fait de donner pour instruction d'ajouter audit ensemble de cuisine (10) un porte-serviettes en papier ou une tige.

8. Le procédé selon la revendication 1, comprenant en outre le fait de donner pour instruction d'ajouter audit ensemble de cuisine (10) des chaises ou des meubles.
